# EUROPÄISCHE PATENTSCHRIFT

(11) **EP 2 080 429 B1**
(45) Veröffentlichungstag und Bekanntmachung des Hinweises auf die Patenterteilung: **01.12.2010**
(21) Anmeldenummer: 09150531.3
(22) Anmeldetag: 14.01.2009
(51) Int. Cl.: A01B 71/08, F16D 3/84

(54) **Schutzeinrichtung, insbesondere Zapfwellenschutz, für ein Endstück einer Welle**
Protection device, in particular p.t.o. shaft for an end piece of a shaft
Dispositif de protection, notamment protection d'une prise de force pour une extrémité d'arbre

(30) Priorität: 15.01.2008 DE 102008000064
(43) Veröffentlichungstag der Anmeldung: 22.07.2009
(73) Patentinhaber: Sauermann, Franz, 86529 Schrobenhausen (DE)
(72) Erfinder: Sauermann, Franz, 86529 Schrobenhausen (DE)
(74) Vertreter: TBK-Patent

(56) Entgegenhaltungen:
- DE-U1- 9 101 862
- DE-U1- 20 010 202
- US-A- 4 432 742
- US-A- 4 840 604

## Beschreibung

Die Erfindung bezieht sich auf eine Schutzeinrichtung gemäß dem Oberbegriff von Anspruch 1 für ein Endstück einer Welle, insbesondere auf einen Zapfwellenschutz für eine Arbeitsmaschine (z. B. Traktor).

Von einem Motor angetriebene Wellen werden auf verschiedenen Arbeitsgebieten eingesetzt. Hierbei ist es wichtig, dass Personen, die sich in der Nähe der über ihr Lager hinausragenden Welle (Zapfwelle) befinden, vor Berührungen mit dieser rotierenden Welle geschützt werden. Dies gilt insbesondere für Arbeitsmaschinen wie z. B. Schlepper oder Traktoren, bei denen derartige Zapfwellen zum Antrieb von diversen Anbaugeräten dienen. Diese Anbaugeräte sind z. B. Mäheinrichtungen, Heuwender und dergleichen. Bei einem Traktor kann sich eine Zapfwelle, die von seinem Motor über den Getriebestrang angetrieben wird, im Front- und/oder im Heckbereich des Traktors befinden. Um das jeweilige Anbaugerät mit dem Traktor zu koppeln, wird von einer Person eine am Anbaugerät angebrachte Gelenkwelle auf die Zapfwelle aufgesteckt.

Nicht nur im angekoppelten Zustand, sondern auch bei abgekoppelter Gelenkwelle muss das Wellenende (der Zapfwellenstummel) bei laufendem Motor des Traktors vor Berührung durch die Benutzerperson geschützt werden. Andernfalls können sich Verletzungen ergeben. Des Weiteren muss sichergestellt sein, dass sich bei abgekoppeltem Anbaugerät nicht Gras, Schmutz, Unrat oder andere Substanzen auf dem möglicherweise weiter rotierendem Zapfwellenstummel aufwickeln. Der Zapfwellenstummel darf daher nicht frei zugänglich sein.

Bisher wurden verschiedene Schutzeinrichtungen für die Zapfwellenstummel an Traktoren eingesetzt. Bei einer ersten bekannten Schutzeinrichtung umgibt ein zylindrischer oder konischer Körper, der am Lager der Zapfwelle festgehalten ist, den Zapfwellenstummel. Dieser zylindrische oder konische Körper ist üblicherweise aus Kunststoff hergestellt. Um ein Anbaugerät abzukoppeln, wird von der Benutzerperson die Gelenkwelle des Anbaugeräts von der Zapfwelle des Traktors abgezogen, so dass diese in eine Freigabestellung gebracht wird. Dann wird eine becherförmige Kappe als Schutzkörper auf das Wellenende aufgesteckt, somit befindet sich die Zapfwelle in der Schutzstellung. Dieses Aufstecken wird gelegentlich vergessen bzw. die Schutzkappe kann verloren gehen.

Bei einer zweiten bekannten Schutzeinrichtung ist der Zapfwellenstummel durch ein U-förmig ausgebildetes Blechbauteil, welches an den Traktor geschweißt, geschraubt oder dergleichen ist, abgedeckt.

Eine dritte bekannte Schutzeinrichtung hat ebenfalls das oben genannte U-förmig ausgebildete Abdeckbauteil aus Blech sowie des Weiteren ein weiteres Blechbauteil, welches an seitlichen Längsschlitzen, die in dem Abdeckbauteil ausgebildet sind, über eine Schrauben-Mutter-Verbindung an dem Abdeckbauteil verstellbar fixiert werden kann. Durch das Lockern und Festziehen der Schraubenverbindungen ist es somit möglich, dass das Abdeckbauteil verschiedene Schwenkpositionen und somit Schutzstellungen hinsichtlich der an dem Traktor festgelegten Lage des weiteren Blechbauteils und des Zapfwellenstummels einnehmen kann.

Bei der Verwendung von Schutzabdeckungen aus Blech treten jedoch folgende Nachteile auf. Üblicherweise müssen Bleche vor Korrosion geschützt werden, d. h. sie müssen zumindest grundiert sein. Diese Grundierung kann jedoch durch den üblichen Einsatzbereich im Land- und Arbeitsmaschinenbau des Zapfwellenschutzes leicht beschädigt werden. Weiter müssen die Schutzstellungen bei dem bekannten Zapfwellenschutz aus Blech immer mittels der Schrauben-Mutter-Verbindung gelockert bzw. wieder angezogen werden, wodurch sich der Montage- bzw. Verstellaufwand durch die Benutzerperson erhöht. Des Weiteren kann die Blechdicke nicht beliebig verkleinert werden, da Trittschutz und Festigkeitsanforderungen an die metallische Schutzeinrichtung für einen Zapfwellenstummel gemäß den bekannten Normvorschriften im Zug- und Landmaschinenbereich eingehalten werden müssen. Somit ist eine Gewichtsreduktion der metallischen Schutzeinrichtung gemäß dem Stand der Technik nur in einem sehr geringen Ausmaß möglich.

DE 91 01 862 U1 zeigt eine Schutzeinrichtung gemäß dem Oberbegriff von Anspruch 1.

Es ist demgemäß eine Aufgabe der vorliegenden Erfindung, eine Schutzeinrichtung gemäß dem Oberbegriff von Anspruch 1, insbesondere einen Zapfwellenschutz, für ein Endstück einer Welle zu verbessern, so dass sie ein geringes Gewicht aufweist und eine einfache Handhabung ermöglicht.

Die Aufgabe der Erfindung wird durch eine Schutzeinrichtung, insbesondere Zapfwellenschutz, für ein Endstück einer Welle nach Anspruch 1 gelöst.

Vorteilhafte Weiterbildungen sind in den Unteransprüchen definiert.

Als Vorteil der Erfindung ist eine Schutzeinrichtung, insbesondere ein Zapfwellenschutz für ein Endstück einer Welle (z. B. ein Zapfwellenstummel) mit einer Abdeckung vorgesehen, die an einem Grundbauteil schwenkbar befestigt ist. Sowohl die Abdeckung als auch das Grundbauteil sind aus Kunststoff hergestellt, wodurch ein geringes Gewicht der Schutzeinrichtung sichergestellt ist.

Bevorzugt ist die Abdeckung ein Abdeckbauteil, das zumindest aus zwei Schenkelabschnitten und einer die Schenkelabschnitte miteinander verbindende Oberplatte besteht. Bevorzugt kann das Abdeckbauteil einstückig und in einer U-Form ausgebildet sein und um eine Schwenkachse an dem Grundbauteil von einer Grundstellung in verschiedene Schutzstellungen schwenkbar sein.

Unter dem Begriff "U-förmig bzw. in einer U-Form" ausgebildetes Abdeckbauteil wird dabei ein Bauteil aus Kunststoff mit zwei Schenkelabschnitten und einer Oberplatte verstanden, die die beiden Schenkelabschnitte miteinander verbindet. Die Form der Schenkelabschnitte kann rechteckig, P-förmig, L-förmig, etc. sein. Erfindungsgemäß ist es ausschließlich erforderlich, dass das Abdeckbauteil an der Arbeitsmaschine (z. B. Traktor oder Schlepper) schwenkbar angebracht ist, so dass das Abdeckbauteil in unterschiedlichen Schutzstellungen bezüglich des Grundbauteils den Zapfwellenstummel oberhalb und seitlich umgibt. Die schwenkbare Anbringung des Abdeckbauteils an dem Grundbauteil kann über eine Schwenkachse, ein oder mehrere Scharniere, etc., die sowohl an dem Abdeckbauteil als auch Grundbauteil befestig sind, erfolgen Das Abdeckbauteil ist bevorzugt an einem oberen Abschnitt des Grundbauteils schwenkbar befestigt, so dass das Abdeckbauteil von einer Grundstellung aus in Richtung zu und weg von der Arbeitsmaschine verschwenkt werden kann.

Bevorzugt ist das Grundbauteil mit einer Schwenkachse an dem Abdeckbauteil schwenkbar befestigt, so dass die verschiedenen Schutzstellungen um die Schwenkachse ausgehend von einer Grundstellung eingestellt werden können. Insbesondere liegt die Schwenkachse in einer Ebene, die rechtwinklig bzw. senkrecht zu der Achse der Welle steht. Somit ist die Schwenkachse von der Achse der Welle beabstandet ausgebildet und senkrecht zur Achse der Welle ausgerichtet.

Bevorzugt liegt das Abdeckbauteil zumindest in einer Grundstellung über einen Anschlag an dem Grundbauteil an, der an zumindest einem der Schenkelabschnitte des Abdeckbauteils seitlich ausgebildet ist. Bevorzugt ist der Anschlag an dem einen Schenkelabschnitt zu dem anderen Schenkelabschnitt des Abdeckbauteils hin zugewandt. Weiter ist es vorteilhaft, dass an beiden Schenkelabschnitten ein Anschlage derart ausgebildet, das die jeweiligen Anschläge der Schenkelabschnitte zueinander korrespondierend gegenüberliegend sind.

Bevorzugt ist das Grundbauteil durch Seitenteile gebildet, die einander gegenüberliegend sind und die durch eine stirnseitige Schutzwand miteinander verbunden sind. Durch diese Ausgestaltung des Grundbauteils wird ein stirnseitig offener Aufnahmeraum gebildet, in dem sich vor, während und nach einem Schwenkvorgang des Abdeckbauteils um die Schwenkachse das Ende der Welle befindet.

Bevorzugt ist zumindest ein Rastmechanismus an mindestens einem Schenkelabschnitt und einem korrespondierenden Seitenteil ausgebildet ist. Der Rastmechanismus kann vorzugsweise derart gestaltet sein, dass in den Seitenteilen oder Schenkelabschnitten zumindest eine Ausnehmung ausgebildet ist, und die mit einer Rastnase, welche von den Schenkelabschnitten des Abdeckbauteils oder Seitenteilen des Grundbauteils seitlich nach innen vorstehend ist, eingreifbar ist, wodurch die entsprechenden Schutzstellungen der Schutzeinrichtung jeweils eindeutig festgelegt werden können. D. h., das Abdeckbauteil kann nach vorne (vom Traktor weg) oder nach hinten (zum Traktor hin) verschwenkt werden, bis die seitlichen Ausnehmungen mit der Rastnase in den Schenkelabschnitten oder Seitenteilen eingreifen, wodurch eine entsprechende verschwenkte Schutzstellung des Abdeckbauteils bzgl. des Grundbauteils eindeutig definiert und festgelegt aber auch fix gehalten wird. Somit ist z. B. ein zusätzliches Festziehen von einem schraubbaren Einstellmechanismus gemäß dem Stand der Technik nicht mehr erforderlich.

Bei dem Rastmechanismus gemäß der Erfindung kann die Rastnase formschlüssig in die korrespondierende Ausnehmung einrasten. Alternativ kann die Rastnase kraft- bzw. reibschlüssig in einer korrespondierenden Ausbuchtung in dem Seitenteil in den entsprechenden Schutzstelllungen aufgenommen werden, um die jeweilige Schwenkstellung des Abdeckbauteils in Bezug auf das Grundbauteil festzulegen und durch den Kraftschluss halten zu können. Alternativ ist es auch möglich, dass der Rastmechanismus nur durch eine reibschlüssige Verbindung mit der Außenfläche des Seitenteils die jeweilige Schutzstellung sicherstellen kann, ohne dass separate Ausnehmungen in dem Seitenteil vorgesehen sind.

Ferner kann die Rastnase in einer Schutzstellung, in der das Abdeckbauteil von dem Grundbauteil bzw. von dem Traktor weg geschwenkt ist, als ein zweiter Anschlag dienen, so dass der zweite Anschlag in dieser Schutzstellung mit der stirnseitigen Endfläche des jeweiligen Seitenteils des Grundbauteils in Anliegekontakt ist, wodurch die Lage des Abdeckbauteils in Bezug auf das Grundbauteil festgelegt und stabil gehalten wird.

Bevorzugt sind die Ausnehmungen als Langlöcher ausgebildet, die zu der im Querschnitt rechteckigen Rastnase korrespondieren, wobei die Langlöcher als Durchgangslöcher in den Seitenteilen ausgebildet sind. Die Ausnehmungen können auch einen kreisförmigen, ovalen, sternförmigen, eckigen, etc. Querschnitt aufweisen. Der Querschnitt der Rastnase sollte dementsprechend korrespondierend zu den Querschnitten der Ausnehmungen gestaltet sein, um einen Formschluss und/oder Kraftschluss beim Einrasten in der jeweiligen Schutzstellung sicherzustellen. Ferner können die Ausnehmungen statt Durchgangslöcher entsprechende Vertiefungen oder Ausbuchtungen in den Seitenteilen des Grundbauteils sein, in denen die Rastnase zumindest teilweise form- und/oder kraftschlüssig aufgenommen werden kann. Alternativ ist es auch möglich, dass die Rastnase z. B. der federbelastete Bolzen eine reibschlüssige Verbindung mit der Außenfläche des Seitenteils bildet, ohne dass separate Ausnehmungen in dem Seitenteil vorgesehen sind, um die jeweilige Schutzstellung halten zu können.

Die Rastnase kann bevorzugt auch als ein z.B. mittels einer Feder belasteter, vorgespannter Bolzen ausgebildet sein, der in den jeweiligen Schutzstellungen einschließlich der Grundstellung in die entsprechenden Ausnehmungen der Seitenteile eingreifbar ist, d.h. einrastet.

Ferner kann bevorzugt auch mehr als eine Rastnase an dem entsprechenden Schenkelabschnitt ausgebildet sein, um die Verrasterung mit den Ausnehmungen in der entsprechenden Schutzstellung an mehreren Stellen der Seitenteile bereitzustellen, so dass sich die Kräfte der Verrasterung über einen entsprechenden Bereich an den Seitenteilen und Schenkelabschnitten aufteilen können.

Die Seitenteile des Grundbauteils sind bevorzugt zueinander gegenüberliegend und durch die stirnseitige Schutzwand miteinander verbunden, die eine flaschenkopfförmige Ausnehmung hat, durch die das Endstück der Welle (Zapfwellenstummel) hindurchtritt, wenn das Grundbauteil an dem Traktor befestigt ist.

Die Ausnehmung in dem Grundbauteil kann auch rechteckig, quadratische, kreisrund oder eine beliebig andere Querschnittsform aufweisen, um eine erforderliche Ausnehmung in der Schutzwand für das Hindurchtreten des Zapfwellenstummels bereitzustellen.

Durch die vorstehend beschriebene erfindungsgemäße Ausgestaltung der Schutzeinrichtung ist es möglich, dass verschiedene Schutzstellungen durch einfaches Verschwenken des Abdeckbauteils bezüglich des Grundbauteils, das an dem Traktor befestigt ist, erreicht werden können, wodurch ein hoher Abbindungsfreiheitsgrad des Wellengegenstücks (Zapfwelle des Anbaugeräts) zu dem Zapfwellenstummel und eine gute Zugänglichkeit zu der Zapfwelle gewährleistet sind und gleichzeitig noch ein ausreichender Schutz vor der drehenden Zapfwelle bzw. dem Zapfwellenstummel gegeben ist.

Bevorzugt ist das Grundbauteil der Schutzeinrichtung vorne und/oder hinten an dem Traktor (Front- und/oder Heckbereich) an dem Traktoraufbau mittels einer Schraubverbindung fixiert. Insbesondere wird das Grundbauteil durch Schrauben, die durch entsprechende Löcher oder Materialaussparungen in der zu dem Traktor hin zugewandten stirnseitigen Schutzwand des Grundbauteils angeordnet sind, an den Traktoraufbau in dem Front- und/oder Heckbereich geschraubt. Die Anordnung des Lochbilds bzw. die Anordnung der Materialaussparungen und deren Anzahl richten sich nach den entsprechenden Gewindelöchern in dem Traktoraufbau.

Die Löcher können auf als senkrechte und/oder waagrechte Schlitze in der Schutzwand des Grundbauteils ausgebildet sein, um somit eine vertikale und/oder horizontale Position des Grundbauteils der Schutzeinrichtung an dem Traktoraufbau einstellen zu können.

Alternativ kann die Schutzeinrichtung über das Grundbauteil auch durch einen entsprechenden Einhak-, Einrast-, Schnappmechanismus etc. an dem Traktoraufbau befestigt sein.

Bevorzugt hat das Abdeckbauteil an seinen beiden Schenkelabschnitten Versteifungsrippen, die z. B. schräg verlaufend oder kreuzförmig seitlich außen an den Schenkelabschnitten ausgebildet sind. Des Weiteren hat das Abdeckbauteil an einem Übergangsbereich von dem Schenkelabschnitt zu der Oberplatte, die die beiden Schenkelabschnitte miteinander verbindet und rechtwinklig zu ihnen angeordnet ist, Versteifungsrippen sowie das Grundbauteil hat an einem Übergangsbereich von den Seitenteilen zu der Schutzwand ebenfalls Versteifungsrippen. Durch die jeweiligen Versteifungsrippen kann die Festigkeit, Trittbeanspruchung und Biegefestigkeit der Schutzeinrichtung erhöht werden, so dass dieselben Festigkeitswerte wie bei einer metallischen Schutzeinrichtung erreicht werden kann, insbesondere kann erreicht werden, dass eine Benutzerperson auf der Schutzeinrichtung stehen kann, ohne dass die Sicherheitsvorschriften bzgl. der Trittsicherheit der Schutzeinrichtung gemäß den entsprechenden Normvorschriften eingeschränkt sind.

Bevorzugt sind die Schenkelabschnitte derart biegeelastisch ausgebildet, dass durch Aufbiegen der Schenkelabschnitte der Anliegekontakt zwischen dem Anschlag und dem Grundbauteil freigegeben wird, um das Abdeckbauteil weiter in Richtung des Grundbauteils schwenken zu können. Alternativ kann der Anschlag derart federbelastet vorgespannt sein, dass der federbelastete Anschlag von dem Schenkelabschnitt vorstehend ist, so dass in einer Anschlagsposition das Abdeckbauteil mit dem Grundbauteil in Anliegekontakt ist, und der Anschlag gegen die Federkraft in den Schenkelabschnitt gedrängt wird, um den Anliegekontakt zwischen dem Anschlag und dem Grundbauteil freizugeben, wenn das Abdeckbauteil weiter in Richtung des Grundbauteils geschwenkt wird.

Bevorzugt kann die Schwenkachse aus einem festen Material wie z. B. aus Kunststoff oder einem metallischen Material hergestellt sein.

Die bevorzugte Anwendung der erfindungsgemäßen Schutzeinrichtung bezieht sich auf eine Arbeitsmaschine, insbesondere auf einen Traktor oder Schlepper, so dass die genannte Welle die Zapfwelle (Zapfwellenstummel) des Traktors an dessen Front- und/oder Heckbereich ist.

Bevorzugte Ausführungsbeispiele der Erfindung sind nachstehend mit Bezug auf die Zeichnungen ausführlich beschrieben.
Fig. 1 zeigt eine Profilansicht einer Schutzeinrichtung gemäß einem ersten Ausführungsbeispiel der Erfindung;
Fig. 2 zeigt eine weitere Profilansicht der Schutzeinrichtung gemäß dem ersten Ausführungsbeispiel der Erfindung von Fig. 1;
Fig. 3 zeigt ein U-förmig ausgebildetes Abdeckbauteil der Schutzeinrichtung gemäß dem ersten Ausführungsbeispiel der Erfindung in einer Profilansicht;
Fig. 4 zeigt eine Unteransicht des Abdeckbauteils der Schutzeinrichtung gemäß dem ersten Ausführungsbeispiel der Erfindung;
Fig. 5 zeigt ein Grundbauteil, an dem das Abdeckbauteil schwenkbar befestigt ist und das an dem Arbeitsmaschinenaufbau anbringbar ist (nicht gezeigt), für die Schutzeinrichtung gemäß dem ersten Ausführungsbeispiel der Erfindung; und
Fig. 6 zeigt eine Schwenkachse, die zwischen dem Abdeckbauteil und dem Grundbauteil, wie in Fig. 1 gezeigt ist, gelagert ist, um das Abdeckbauteil an dem Grundbauteil der Schutzeinrichtung gemäß dem ersten Ausführungsbeispiel der Erfindung schwenkbar zu befestigen.
Fig. 7 zeigt eine Profilansicht einer Schutzeinrichtung gemäß einem zweiten Ausführungsbeispiel der Erfindung in einer Grundstellung;
Fig. 8 zeigt eine Profilansicht der Schutzeinrichtung gemäß dem zweiten Ausführungsbeispiel der Erfindung in einer ersten Schutzstellung, in der das Abdeckbauteil von dem Grundbauteil weg geschwenkt ist;
Fig. 9A und 9B zeigen Profilansichten der Schutzeinrichtung gemäß dem zweiten Ausführungsbeispiel der Erfindung in einer zweiten Schutzstellung, in der das Abdeckbauteil zu dem Grundbauteil hin geschwenkt ist;

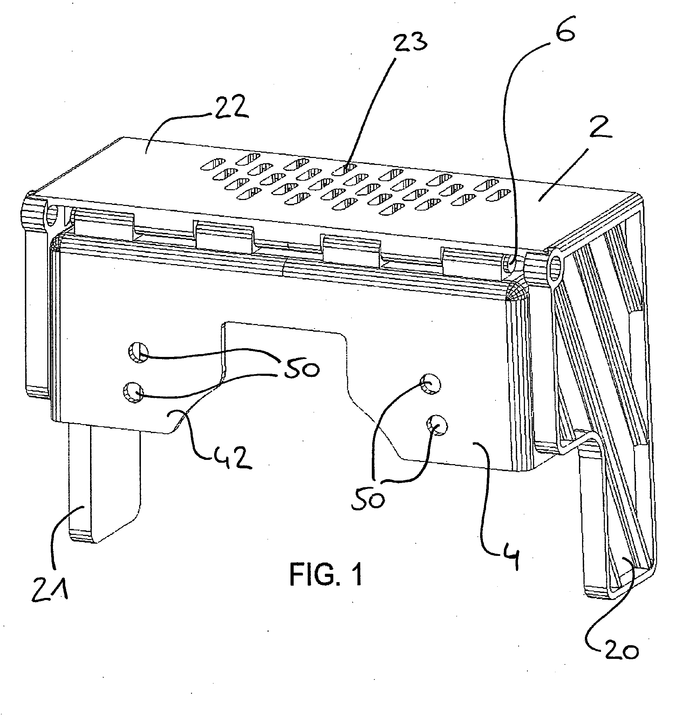

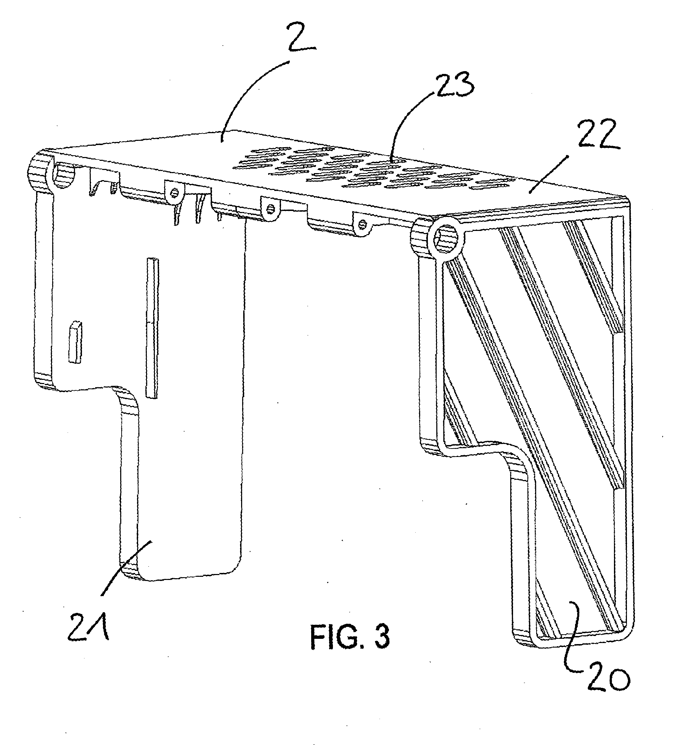

Nachstehend ist eine Schutzeinrichtung gemäß einem Ausführungsbeispiel der vorliegenden Erfindung mit Bezug auf die vorstehend erwähnten Fig. 1 bis 6 ausführlich beschrieben.

Die Schutzeinrichtung besteht im Wesentlichen aus einem Abdeckbauteil 2 (Abdeckung), einem Grundbauteil 4 und einer Schwenkachse 6, wie in Fig. 1 gezeigt ist. Das Abdeckbauteil 2, das Grundbauteil 4 und die Schwenkachse 6 sind aus Kunststoff hergestellt, um ein möglichst geringes Gesamtgewicht der Schutzeinrichtung sicherzustellen.

Ein Zapfwellenstummel (nicht gezeigt) einer Arbeitsmaschine z. B. eines Traktors ist durch die Schutzeinrichtung, insbesondere durch das Abdeckbauteil 2 von der Seite und von oberhalb geschützt. Der Zapfwellenstummel (Zapfwelle oder Endstück einer Welle) ist mit einem (nicht gezeigten) Motor-Getriebestrang des Traktors verbunden. Der Zapfwellenstummel des Traktors kann an dem Front- und/oder Heckbereich des Traktors angeordnet sein. Dementsprechend wird die Schutzeinrichtung vorne und/oder hinten an dem Traktor in üblicher Weise z. B. durch Anbringen des Grundbauteils 4 an dem Traktoraufbau mittels einer Schraubverbindung (nicht gezeigt) fixiert. Insbesondere fixieren Schrauben (nicht gezeigt), die durch Löcher 50 in einer stirnseitigen Schutzwand 42 des Grundbauteils 4 hindurchtreten und in den Traktoraufbau geschraubt werden, die Schutzeinrichtung in einer vorbestimmten Lage an dem Traktoraufbau. Alternativ kann die Schutzeinrichtung über das Grundbauteil auch durch einen (nicht gezeigten) Einhak- oder Schnappmechanismus an dem Traktoraufbau befestigt sein. Da die Anbringung der Schutzeinrichtung an dem Traktoraufbau üblicherweise bekannt ist, ist deren ausführliche Beschreibung unterlassen.

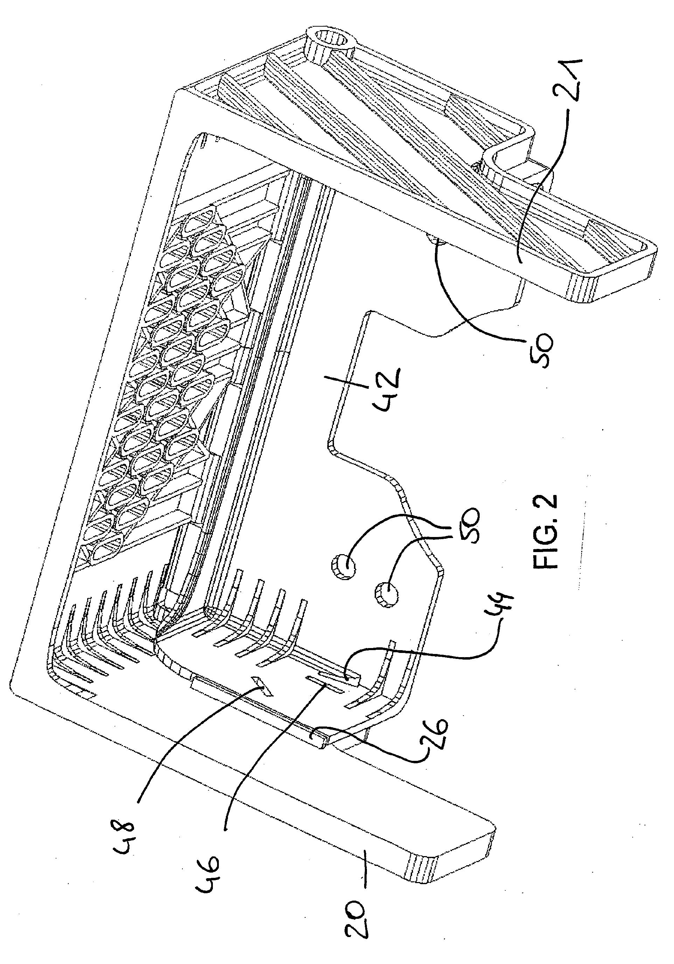

Die Schutzeinrichtung ist in Fig. 1 und 2 in einer Grundstellung gezeigt, die den nicht gezeigten Zapfwellenstummel vor Schmutz, Gras, Fasern oder dergleichen schützt. Weiter schützt die Schutzeinrichtung auch die Benutzerperson vor Verletzungen, die ansonsten beim An- oder Abkuppeln der sich drehenden Zapfwelle entstehen können. Somit ist es ein wesentliches Merkmal der Schutzeinrichtung der vorliegenden Erfindung, die Benutzerperson ausreichend vor Verletzungen beim Hantieren im Bereich der Zapfwelle zu schützen.

Das Abdeckbauteil 2 ist U-förmig ausgebildet, d. h. es hat zwei Schenkelabschnitte 20 und 21, die gemeinsam durch eine Oberplatte 22 an ihrer Oberseite miteinander einstückig verbunden sind. Es ist alternativ auch vorstellbar, das das Abdeckbauteil 2 aus drei separaten Teilen (d. h. zwei Seitenteile und ein Oberteil) gebildet wird, welche miteinander stabil verbunden sind.

In der erfindungsgemäßen Schutzeinrichtung des gezeigten Ausführungsbeispiels stehen die beiden Schenkelabschnitte 20 und 21 an dem linken und rechten Endabschnitt der Oberplatte 22 (d. h. links und rechts in Fig. 1) in einem Winkel von 90 Grad zur Oberplatte 22 senkrecht nach unten vor. Die Schenkelabschnitte 20, 21 haben des Weiteren Versteifungsrippen, um eine erforderliche Biegefestigkeit des Abdeckbauteils 2 zu gewährleisten. Im Übrigen ist, wie in Fig. 1 gezeigt ist, die Oberplatte 22 mit einer Vielzahl von Löchern 23 versehen. Diese Löcher 23 erlauben es einer Benutzerperson, zu kontrollieren, ob die von dem Abdeckbauteil 2 umgebende Zapfwelle in oder außer Betrieb ist, d. h. ob sie sich dreht oder nicht dreht. Das Vorsehen der Löcher 23 ermöglicht somit eine Kontrolle des Betriebs der Zapfwelle für die Benutzerperson.

Um Gewicht einsparen zu können und um ein Verschwenken des Abdeckbauteils 2 in Richtung des Traktoraufbaus zu ermöglichen, sind die Schenkelabschnitte 20, 21 P-förmig ausgebildet. Die aufgrund der P-Form gegebene Materialaussparung bewirkt eine Reduktion des Gewichts der Schenkelabschnitte 20 und 21, d. h. des gesamten Abdeckbauteils 2. Weiter kann aufgrund dieser Materialaussparung das Abdeckbauteil 2 bezüglich des Grundbauteils 4 weiter in Richtung des Traktoraufbaus geschwenkt werden, was nachstehend beschrieben ist.

Weiter ist die Oberplatte 22 mit drei Aufnahmeabschnitten vorgesehen, die an dem traktorseitig zugewandten Ende der Oberplatte 22 nach unten vorstehend sind und jeweils ein Durchgangsloch haben. Diese Durchgangslöcher nehmen die Schwenkachse 6 auf, so dass das Abdeckbauteil 2 um diese Achse schwenkbar ist.

Ferner weist das Abdeckbauteil 2 an seinen Übergängen von den Schenkelabschnitten 20 und 21 zu der Oberplatte 22 an der Innenseite des Bauteils und im Bereich der Aufnahmeabschnitte und Löcher 23 an der Innenseite der Oberplatte 22 weitere Versteifungsrippen auf, wodurch die Festigkeit insbesondere die Biegesteifigkeit des Abdeckbauteils 2 weiter erhöht wird. Es ist somit durch die Versteifungsrippen an den Übergangsbereichen, der Oberplatte und den Schenkelabschnitten gewährleistet, dass die Benutzerperson auf dem Abdeckbauteil 4 stehen kann, ohne dass sich die Abdeckung insbesondere das Abdeckbauteil 2 übermäßig verformt. Somit ist eine Trittsicherheit für die Schutzabdeckung gegeben. Normalerweise ist eine Trittsicherheit hinsichtlich einer Belastung von 100 kg gemäß den Normanforderungen des Zapfwellenschutzes bei Traktoren ausreichend. Es können jedoch auch höhere Belastungswerte durch entsprechendes Vorsehen von weiteren und/oder verstärkten Versteifungsrippen an den Kunststoffbauteilen erreicht werden.

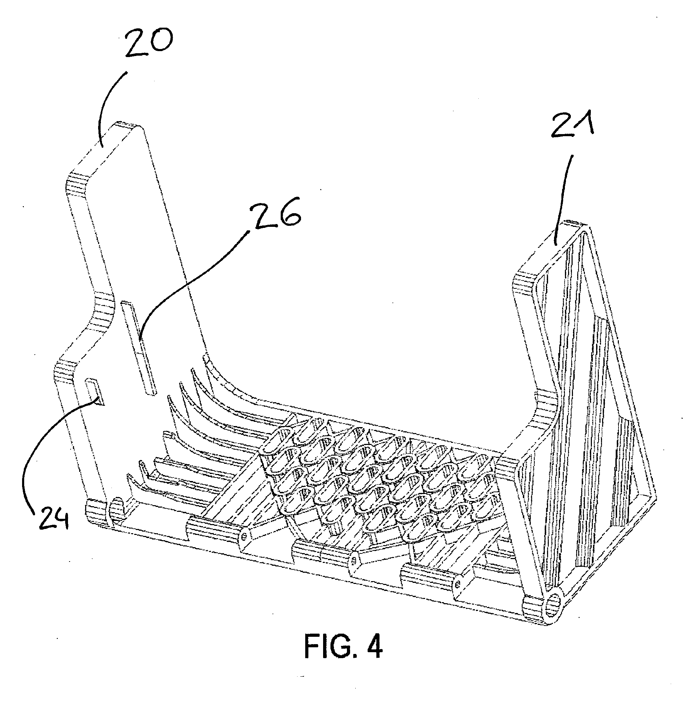

Ferner ist, wie in Fig. 2 und Fig. 4 gezeigt ist, an jedem Schenkelabschnitt 20, 21 an seiner Innenseite eine Rastnase 24 sowie ein Anschlag 26 von der Innenseite in Richtung des anderen Schenkelabschnitts radial nach innen vorstehend. Die Funktionen und Wirkungsweisen dieser Rastnase 24 und des Anschlags 26 sind im Anschluss genauer erläutert.

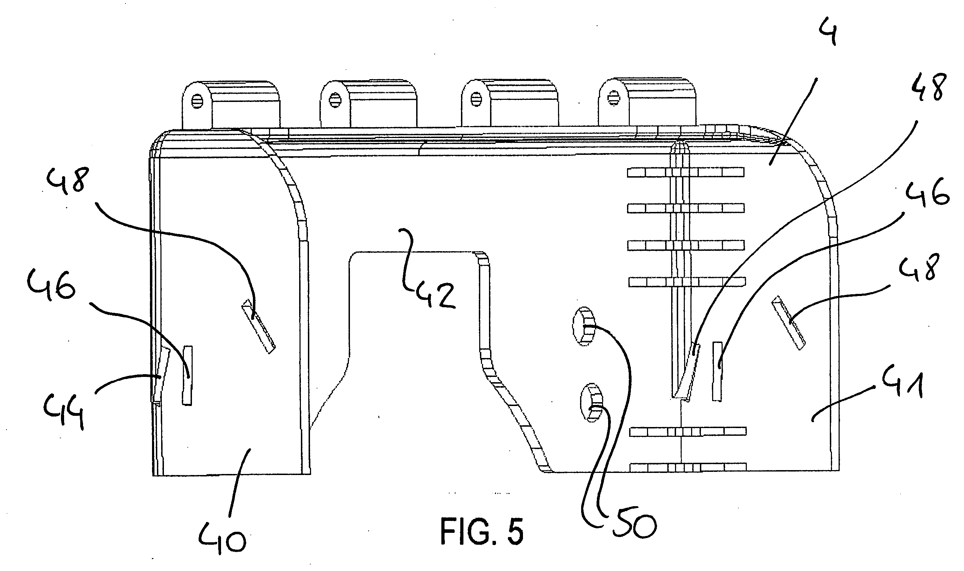

Des Weiteren ist in Fig. 1 und insbesondere in Fig. 5 die Gestaltung des Grundbauteils 4 ausführlich gezeigt. Das Grundbauteil 4 hat zwei zueinander parallele Seitenwände (Seitenteile 40, 41), die an deren hinteren Enden, d. h. an der zu dem Traktor hin gewandten Seite mittels einer Schutzwand 42 verbunden sind. An der Oberseite der Schutzwand 42 und der Seitenteile 40, 41 ist ein rechtwinklig zu der Schutzwand 42 und den Seitenteilen 40, 41 angeordneter Materialbereich vorgesehen, von dem entsprechende Aufnahmeabschnitte (vier in dem Ausführungsbeispiel) des Grundbauteils 4 für die Schwenkachse 6 nach oben vorstehend sind. Somit ist das Abdeckbauteil 2 mittels der Schwenkachse 6 an dem Grundbauteil 4 schwenkbar aufgenommen und befestigt.

Die Schutzwand 42 hat des Weiteren eine flaschenkopfförmige Ausnehmung, welche alternativ auch rechteckförmig, kreisrund etc. ausgebildet sein kann, wobei diese Ausnehmung dazu dient, den Zapfwellenstummel in sich aufzunehmen bzw. diesen zu umgeben. Rechts und links dieser Ausnehmung sind in dem Ausführungsbeispiel jeweils zwei Löcher 50 vorgesehen, durch die das Grundbauteil 4 mittels Schrauben (nicht gezeigt) an dem Traktoraufbau fixiert werden kann.

Die Anordnung und Anzahl der Löcher 50 in der Schutzwand 42 des Grundbauteils 4 hängt einzig und allein von dem vorgegebenen Gewindelochbild an dem Traktoraufbau im Front- und/oder Heckbereich des Traktors ab. Es sind somit alternativ zu dem gezeigten Ausführungsbeispiel mit insgesamt vier Löchern 50 verschiedenste Lochbildanordnungen in der Schutzwand 42 vorstellbar.

Des Weiteren weisen die Seitenteile 40 und 41 Ausnehmungen, z. B. Langlöcher 44, 46 und 48 auf. Diese Langlöcher 44, 46 und 48 dienen als Aufnahme- bzw. Einrastbereiche für die Rastnase 24 des Abdeckbauteils 2 in den jeweiligen Schutzstellungen und der Grundstellung des Abdeckbauteils 2 im Bezug auf das Grundbauteil 4. Somit bilden die Langlöcher 44, 46 und 48 und die Rastnase 24 einen Rastmechanismus aus, durch den die verschiedenen Schutzstellungen eingestellt und fixiert werden können. In dem Ausführungsbeispiel sind drei Schutzstellungen durch den Rastmechanismus definiert, es können aber auch mehr als drei oder weniger als drei Schutzstellungen durch das entsprechende Vorsehen von Ausnehmungen bereitgestellt werden. Gemäß der Erfindung können die Ausnehmungen an den Schenkelabschnitten des Abdeckbauteils und die Rastnase an den Seitenteilen des Grundbauteils ausgebildet sein.

Ferner ist es erfindungsgemäß ausreichend, den Rastmechanismus an mindestens einem Schenkelabschnitt des Abdeckbauteils und einem korrespondierenden Seitenteil des Grundbauteils auszubilden.

Wie in Fig. 1 gezeigt ist, ist die Rastnase 24 mit dem Langloch 46 in der Grundstellung des Abdeckbauteils 4 in Eingriff. Durch Aufbiegen der Schenkelabschnitte 20, 21 kann der Anliegekontakt zwischen dem Anschlag 26 und dem Grundbauteil 4 und der Eingriff zwischen der Rastnase 24 und dem Langloch 46 freigegeben werden, um das Abdeckbauteil 2 in Richtung des Grundbauteils 4 (d. h. zu dem Traktor hin) oder von diesem weg schwenken zu können. D. h. wenn der Anliegekontakt und Rasteingriff freigeben wurde, kann das Abdeckbauteil 2 bezüglich des Grundbauteils 4 nach vorne bzw. nach hinten verschwenkt werden kann.

Um ein Durchschwenken des Abdeckbauteils 2 bezüglich des Grundbauteils 4 sicher verhindern zu können, wenn z. B. eine außerordentlich hohe Gewichtsbelastung auf das Abdeckbauteil 2 aufgebracht wird, so dass der Rasteingriff gelockert oder sogar aufgehoben wird, da sich die Seitenteile 40, 41 und/oder die Schenkelabschnitte 20, 21 aufgrund der Gewichtsbelastung verformen, liegt das Abdeckbauteil 2 durch seinen Anschlag 26 an den stirnseitigen Endflächen der Seitenteile 40, 41 des Grundbauteils 4 in der Grundstellung der Schutzeinrichtung an, in der die Schutzplatte 42 rechtwinkelig zu der Oberplatte 22 angeordnet ist (siehe z. B. Fig. 1 und 2).

Wenn nun das Abdeckbauteil 2 vom Grundbauteil 4 (vom Traktor) weg geschwenkt wird, kann die Schutzeinrichtung so lange verschwenkt werden, bis das Langloch 48 mit der Rastnase 24 in Eingriff kommt. Wenn die Rastnase 24 mit dem Loch 48 in Rasteingriff gerät (einrastet), ist eine erste Schutzstellung definiert, in der die Schutzwand 42 des Grundbauteils 4 und die Oberplatte 22 des Abdeckbauteils 2 einen stumpfen Winkel zueinander aufweisen. D. h. in dieser ersten Schutzstellung ragt das Abdeckbauteil 2 von dem Grundbauteil 4 schräg nach vorn, wodurch ein höherer Freiheitsgrad für die Anbindung der Zapfwelle an dem Zapfwellenstummel gegeben ist und gleichzeitig ein besserer Zugang für die Benutzerperson für die Zapfwellenanbindung bei ausreichendem Schutz durch die Schutzeinrichtung gewährleistet ist.

Weiter kann das Abdeckbauteil 2 bezüglich des Grundbauteils 4 auch nach hinten, d. h. in Richtung des Traktors verschwenkt werden. Hierzu wird wiederum eine Kraft von innen nach außen durch die Nutzerperson auf den rechten bzw. linken Schenkelabschnitt des Abdeckbauteils 2 aufgebracht, um den Eingriff zwischen der Rastnase 24 und dem Langloch 46 freizugeben. Gleichzeitig muss so eine Kraft aufgebracht werden, um die Schenkelabschnitte 20, 21 derart elastisch zu verbiegen, so dass diese an dem Anschlag 26 vorbei nach hinten geführt werden können. Die Abschnitte werden so lange nach hinten geschwenkt, bis das Langloch 44 mit der Rastnase 24 in Eingriff kommt (einrastet). In dieser zweiten Schutzstellung ist das Abdeckbauteil 2 zu dem Traktor hin zugewandt, d. h. die Schutzwand 42 und die Oberplatte 22 stehen in einem spitzen Winkel zueinander, wodurch sich ein höherer Freiheitsgrad für einen Oberlenker des Traktors ergibt.

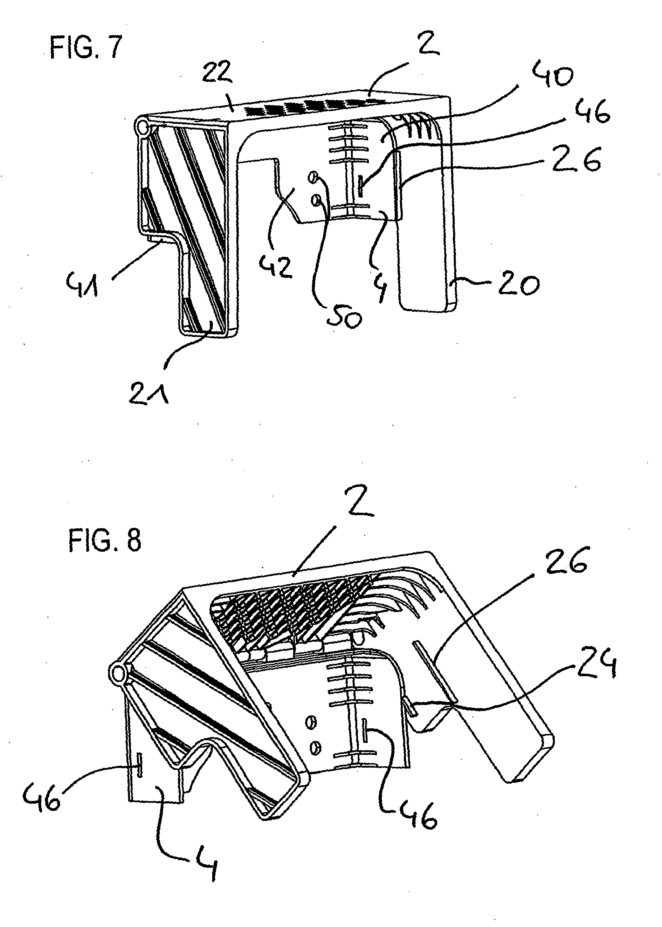

Eine weitere Ausführungsform der Schutzeinrichtung gemäß einem zweiten Ausführungsbeispiel der vorliegenden Erfindung ist nachstehend mit Bezug auf die Fig. 7 bis 9B beschrieben. Gleiche bzw. korrespondierende Bauteile in dem zweiten Ausführungsbeispiel sind mit den gleichen Bezugszeichen wie in dem ersten Ausführungsbeispiel bezeichnet. Nachstehend sind nur die Unterschiede in Bezug auf das erste Ausführungsbeispiel beschrieben.

In dem zweiten Ausführungsbeispiel weisen die Seitenteile 40 und 41 des Grundbauteils 4 nur jeweils eine Ausnehmung, das Langloch 46 für die Grundstellung der Schutzeinrichtung auf. Wie in Fig. 7 gezeigt ist, ist die jeweilige Rastnase 24 an dem Schenkelabschnitt 20, 21 mit dem Langloch 46 in der Grundstellung des Abdeckbauteils 4 in Eingriff und die stirnseitigen Endflächen der Seitenteile 40, 41 des Grundbauteils 4 sind mit dem jeweiligen Anschlag 26 in Anliegekontakt.

Durch Aufbiegen der Schenkelabschnitte 20, 21 wird der Anliegekontakt zwischen dem Anschlag 26 und dem Grundbauteil 4 und der Eingriff zwischen der Rastnase 24 und dem Langloch 46 freigegeben werden, um das Abdeckbauteil 2 in Richtung des Grundbauteils 4 (d. h. zu dem Traktor hin) oder von diesem weg schwenken zu können.

Wenn nun das Abdeckbauteil 2 vom Grundbauteil 4 (vom Traktor) weg in die erste Schutzstellung geschwenkt wird, wird das Abdeckbauteil 2 der Schutzeinrichtung so lange verschwenkt, bis die Rastnase 24 mit der stirnseitigen Endfläche des Seitenteils 20, 21 des Grundbauteils 4 in Anliegekontakt kommt (siehe Fig. 8). Somit ist durch diesen Anliegekontakt zwischen der Rastnase 24, der in der ersten Schutzstellung als ein zweiter Anschlag dient, und dem Seitenteil 20, 21 die Lage des Abdeckbauteils 2 in Bezug auf das Grundbauteil 4 festgelegt und eindeutig definiert. Insbesondere kann, um einen ausreichend großen Anliegekontakt zwischen der Rastnase 24 und dem jeweiligen Seitenteil 20, 21 in der ersten Schutzstellung sicherzustellen, die Rastnase 24 an ihrem oberen Bereich ein schräge Fläche aufweisen, wodurch die Anschlagsfläche der Rastnase 24 vergrößert ist.

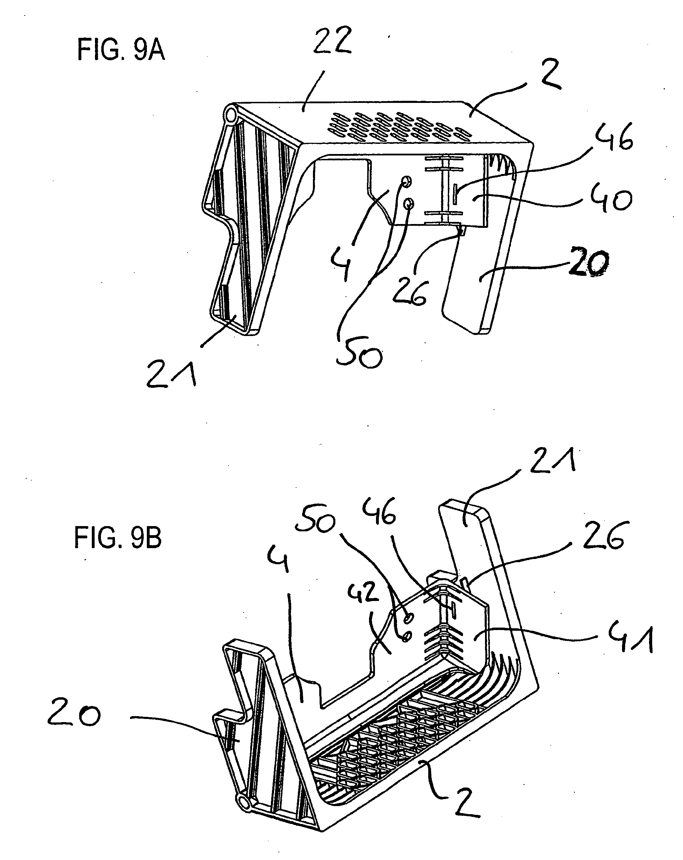

Ferner kann das Abdeckbauteil 2 bezüglich des Grundbauteils 4 auch nach hinten, d. h. in Richtung des Traktors verschwenkt werden. Hierzu wird wiederum eine Kraft von innen nach außen durch die Nutzerperson auf den rechten bzw. linken Schenkelabschnitt des Abdeckbauteils 2 aufgebracht, um den Eingriff zwischen der Rastnase 24 und dem Langloch 46 freizugeben und um die Schenkelabschnitte 20, 21 derart elastisch zu verbiegen, so dass diese an dem Anschlag 26 vorbei nach hinten geführt und um die Schwenkachse 6 in die zweite Schutzstellung geschwenkt werden können (siehe Fig. 9A und 9B). Die Lage der zweiten Schutzstellung ist durch das Anliegen der stirnseitigen Endfläche der Seitenteils 20, 21 an einer Versteifungsrippe an dem Übergangsbereich zwischen den Schenkelabschnitten 20, 21 und der Oberplatte 22 und durch den Reibkontakt des Anschlags 26 an der jeweiligen Außenseitenfläche des Seitenteils 20, 21 festgelegt (siehe Fig. 9B).

Ferner kann z. B. in dem ersten Ausführungsbeispiel, obwohl es in den Figuren nicht dargestellt ist, der rechte und der linke Schenkelabschnitt 40, 41 mit einer Materialvertiefung (Ausbuchtung nach innen) oder einer Materialausnehmung zwischen dem Langloch 46 und dem Langloch 48 ausgebildet sein, um ein Verschwenken des Abdeckbauteils 2 zum Traktor hin und gleichzeitig einen Aufnahmebereich für den Anschlag 26 bereitzustellen, ohne dass die Schenkelabschnitte 40, 41 aufgrund des Vorhandensein des Anschlags 26 übermäßig nach außen gedrückt werden, so dass die zweite Schutzstellung sicher durch den Rasteingriff zwischen der Rastnase 24 und dem Langloch 44 gehalten werden kann.

Alternativ können die jeweiligen Anschläge auch federbelastete Anschläge sein, so dass die federbelasteten Anschläge von den Schenkelabschnitten vorstehen, wenn das Abdeckbauteil mit dem Grundbauteil in Anliegekontakt ist. Wenn nun das Abdeckbauteil z. B. nach hinten, d. h. an dem Anschlag vorbei, geschwenkt werden soll, kann der Anschlag gegen die Federkraft in den Schenkelabschnitt gedrängt werden, um den Anliegekontakt zwischen dem Anschlag und dem Grundbauteil freizugeben, so dass das Abdeckbauteil in Richtung des Traktors in die zweite Schutzstellung geschwenkt wird, ohne dass entsprechende Materialausbuchtung oder Ausnehmungen in den Seitenteilen für die Aufnahme von ortsfesten Anschlägen erforderlich sind.

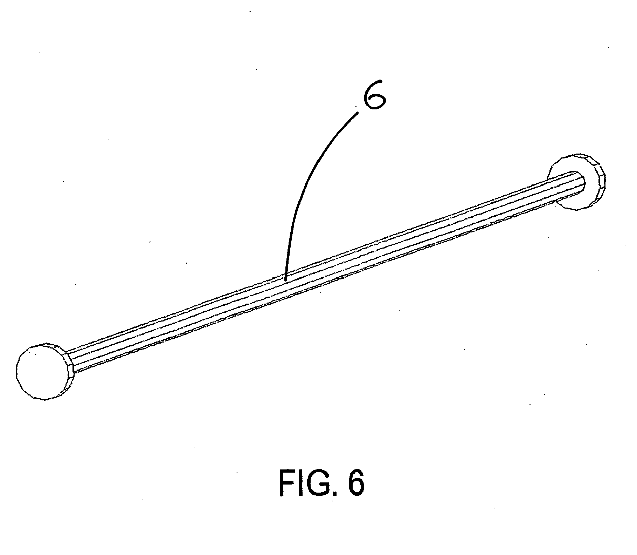

Im Übrigen ist in Fig. 6 die Schwenkachse 6 als ein zylindrisches Bauteil dargestellt. Dieses zylindrische Bauteil ist an seinen Enden tellerförmig ausgebildet. Dieses Bauteil ist üblicherweise aus Kunststoff ausgebildet, kann aber auch als ein metallisches Bauteil ausgebildet sein.

Bei einer Herstellung der Schutzeinrichtung gemäß dem Ausführungsbeispiel wird die Schwenkachse 6 gelagert gehalten und dann wird das Grundbauteil 4 im Spritzgussverfahren um die Schwenkachse 6 herum mit den vier Aufnahmeabschnitten spritzgegossen.

Dann kann das fertig geformte Grundbauteil 4 gemeinsam mit der Schwenkachse 6 zu einer weiteren Spritzgussmaschine weitergegeben werden, wo das Abdeckbauteil 2 mittels des Spritzgussverfahrens, um die verbleibenden offenen Zylinderstellen der Schwenkachse 6 herum, an denen die Aufnahmeabschnitte des Grundbauteils 4 nicht ausgebildet sind, und um das Grundbauteil 4 herum spritzgegossen wird. Somit wird die Schutzeinrichtung als ein quasi-einstückiges Bauteil im Spritzgussverfahren durch das Grundbauteil 4, die Schwenkachse 6 und das Abdeckbauteil 2 ausgebildet.

Alternativ kann das Abdeckbauteil 2 auch mit der gleichen Spritzgussmaschine wie das Grundbauteil 4 hergestellt werden, ohne das eine weitere Spritzgussmaschine zum Einsatz kommt.

Alternativ kann die Schutzeinrichtung statt mittels Spritzguss quasi-einstückig auch aus drei separat hergestellten Bauteilen zusammengebaut werden. Selbstverständlich dienen die vorstehend beschriebenen Ausführungsbeispiele nur der Veranschaulichung und beschränken die Erfindung nicht. Die vorliegende Erfindung kann auch auf zahlreiche weitere Arten und Weisen Anwendung finden, die sich aus dem Schutzumfang der beigefügten Patentansprüche für den Fachmann ergeben.

## Patentansprüche

1. Schutzeinrichtung, insbesondere Zapfwellenschutz, für ein Endstück einer Welle mit einer einstückig U-förmig ausgebildeten Abdeckung (2), die an einem Grundbauteil (4) schwenkbar befestigt ist und um eine Schwenkachse (6) von einer Grundstellung in verschiedene Schutzstellungen schwenkbar ist,
**dadurch gekennzeichnet, dass**
sowohl die Abdeckung (2) als auch das Grundbauteil (4) aus Kunststoff hergestellt sind und die U-förmige Abdeckung (2) an ihren beiden Schenkelabschnitten (20, 21) Versteifungsrippen hat, um die Trittbeanspruchung und Biegefestigkeit der Abdeckung (2) zu erhöhen, so dass die Schutzeinrichtung eine Trittstufe ausbildet, und
die Abdeckung (2) als ein Abdeckbauteil (2) ausgebildet ist, das zumindest in der Grundstellung über einen an zumindest einem der Schenkelabschnitte (20, 21) des Abdeckbauteils (2) seitlich ausgebildeten Anschlag (26) an dem Grundbauteil (4) anliegt.

2. Schutzeinrichtung nach Anspruch 1, **dadurch gekennzeichnet, dass** das Abdeckbauteil (2) zumindest aus den beiden Schenkelabschnitten (20, 21) und einer die Schenkelabschnitte (20, 21) miteinander verbindende Oberplatte (22) besteht.

3. Schutzeinrichtung nach Anspruch 1 oder 2, **dadurch gekennzeichnet, dass** die Schwenkachse (6) rechtwinkelig in Bezug auf die Achse der Welle angeordnet ist.

4. Schutzeinrichtung nach Anspruch 1, **dadurch gekennzeichnet, dass** der Anschlag (26) an dem einen Schenkelabschnitt (20) zu dem anderen Schenkelabschnitt (21) des Abdeckbauteils (2) hin zugewandt ist.

5. Schutzeinrichtung nach Anspruch 1 oder 4, **dadurch gekennzeichnet, dass** der Anschlag (26) an beiden Schenkelabschnitten (20, 21) derart ausgebildet ist, das die jeweiligen Anschläge (26) zueinander korrespondierend gegenüberliegend sind.

6. Schutzeinrichtung nach einem der Ansprüche 1 bis 5, **dadurch gekennzeichnet, dass** das Grundbauteil (4) Seitenteile (40, 41) hat, die einander gegenüberliegend sind und durch eine stirnseitige Schutzwand (42) miteinander verbunden sind.

7. Schutzeinrichtung nach Anspruch 6, **dadurch gekennzeichnet, dass** ein Rastmechanismus (24; 44, 46, 48) an mindestens einem Schenkelabschnitt (20, 21) und einem korrespondierenden Seitenteil (40, 41) ausgebildet ist.

8. Schutzeinrichtung nach Anspruch 7, **dadurch gekennzeichnet, dass** der Rastmechanismus (24; 44, 46, 48) derart gestaltet ist, dass in den Seitenteilen (40, 41) zumindest eine Ausnehmung (44, 46, 48) ausgebildet ist, die mit einer Rastnase (24), welche von den Schenkelabschnitten (20, 21) des Abdeckbauteils (2) seitlich nach innen vorstehend ist, eingreifbar ist, um die entsprechenden Schutzstellungen des Abdeckbauteils (2) bezüglich des Grundbauteils (4) festzulegen und zu halten.

9. Schutzeinrichtung nach Anspruch 8, **dadurch gekennzeichnet, dass** die Ausnehmung (44, 46, 48) in den Seitenteilen (40, 41) als Langloch (44, 46, 48) ausgebildet ist.

10. Schutzeinrichtung nach einem der Ansprüche 6 bis 9, **dadurch gekennzeichnet, dass** die Schutzwand (42) eine flaschenkopfförmige Ausnehmung hat, durch die das Endstück der Welle hindurchtreten kann.

11. Schutzeinrichtung nach einem der Ansprüche 6 bis 10, **dadurch gekennzeichnet, dass** das Abdeckbauteil (2) an einem Übergangsbereich von dem Schenkelabschnitt (20, 21) zu der Oberplatte (22), die die beiden Schenkelabschnitte (20, 21) miteinander verbindet und rechtwinkelig zu ihnen angeordnet ist, Versteifungsrippen hat und das Grundbauteil (4) an einem Übergangsbereich von den Seitenteilen (40, 41) zu der Schutzwand (42) ebenfalls Versteifungsrippen hat, so dass sich die Festigkeit und Biegesteifigkeit der Bauteile (2 und 4) erhöht.

12. Schutzeinrichtung nach einem der Ansprüche 1 bis 11, **dadurch gekennzeichnet, dass** die Schenkelabschnitte (20, 21) derart biegeelastisch sind, dass durch Aufbiegen der Schenkelabschnitte (20, 21) der Anliegekontakt zwischen dem Anschlag (26) und dem Grundbauteil (4) freigegeben wird, um das Abdeckbauteil (2) weiter in Richtung des Grundbauteils (4) schwenken zu können.

13. Schutzeinrichtung nach einem der Ansprüche 1 bis 11, **dadurch gekennzeichnet, dass** der Anschlag (26) derart federbelastet vorgespannt ist, dass der Anschlag (26) von dem Schenkelabschnitt (20, 21) vorstehend ist, damit in einer Anschlagsposition das Abdeckbauteil (2) mit dem Grundbauteil (4) in Anliegekontakt ist, und der Anschlag (26) gegen die Federkraft in den Schenkelabschnitt (20, 21) gedrängt wird, um den Anliegekontakt zwischen dem Anschlag (26) und dem Grundbauteil (4) freizugeben, wenn das Abdeckbauteil (2) weiter in Richtung des Grundbauteils (4) geschwenkt wird.

14. Schutzeinrichtung nach einem der Ansprüche 1 bis 13, **dadurch gekennzeichnet, dass** die Schwenkachse (6) aus Kunststoff oder einem metallischem Material hergestellt ist.

15. Schutzeinrichtung nach einem vorangegangenen Ansprüche, **dadurch gekennzeichnet, dass** die Schutzeinrichtung geeignet ist, die Zapfwelle einer Arbeitsmaschine, insbesondere eines Traktors, zu schützen.

## Claims

1. A protection device, in particular power take-off shaft protection, for an end piece of a shaft, comprising an integrally formed U-shaped cover (2) which is pivotally mounted to a base member (4) and is pivoting about a pivot axis (6) from a home position into various protective positions,
**characterized in that**
both the cover (2) and the base member (4) are made of plastic material and the U-shaped cover (2) includes reinforcing ribs at its two leg portions (20, 21) to increase the tread load and the flexural strength of the cover (2) so that the protection device constitutes a tread, and
the cover (2) is formed as a cover member (2) which abuts against the base member (4) via a stop (26) at least in the home position, the stop (26) being laterally formed on at least one of the leg portions (20, 21) of the cover member (2).

2. A protection device according to claim 1, **characterized in that** the cover member (2) consisting at least of two leg portions (20, 21) and a top plate (22) interconnecting said leg portions (20, 21).

3. A protection device according to claim 1 or 2, **characterized in that** the pivot axis (6) is arranged at right angles with respect to the axis of the shaft.

4. A protection device according to claim 1, **characterized in that** the stop (26) provided at the one leg portion (20) faces the other leg portion (21) of the cover member (2).

5. A protection device according to claim 1 or 4, **characterized in that** the stop (26) is formed at both leg portions (20, 21) such that the respective stops (26) are opposed in a corresponding manner.

6. A protection device according to any one of claims 1 to 5, **characterized in that** the base member (4) includes side parts (40, 41) which are opposed to each other and are interconnected by a front side protective wall (42).

7. A protection device according to claim 6, **characterized in that** a lock mechanism (24; 44, 46, 48) is formed on at least one leg portion (20, 21) and one corresponding side part (40, 41).

8. A protection device according to claim 7, **characterized in that** the lock mechanism (24; 44, 46, 48) is configured such that in the side parts (40, 41) at least one recess (44, 46, 48) is formed which is adapted to engage with a detent (24) projecting laterally inwardly from the leg portions (20, 21) of the cover member (2) so as to determine and hold the appropriate protective positions of the cover member (2) with respect to the base member (4).

9. A protection device according to claim 8, **characterized in that** the recess (44, 46, 48) is formed as oblong hole (44, 46, 48) in the side parts (40, 41).

10. A protection device according to any one of claims 6 to 9, **characterized in that** the protective wall (42) has a bottle-neck-shaped recess through which the end piece of the shaft is allowed to pass.

11. A protection device according to any one of claims 6 to 10, **characterized in that** the cover member (2) includes reinforcing ribs at a transition area from the leg portion (20, 21) to the top plate (22) interconnecting the two leg portions (20, 21) and being arranged at right angles with respect to the latter, and the base member (4) likewise includes reinforcing ribs at a transition area from the side parts (40, 41) to the protective wall (42) so that the strength and the flexural strength of the members (2 and 4) is increased.

12. A protection device according to any one of claims 1 to 11, **characterized in that** the leg portions (20, 21) are resilient such that by bending the leg portions (20, 21) the abutting contact between the stop (26) and the base member (4) is released so that the cover member (2) can be pivoted further toward the base member (4).

13. A protection device according to any one of claims 1 to 11, **characterized in that** the stop (26) is spring-biased such that the stop (26) is projecting from the leg portion (20, 21) so that the cover member (2) abuts against the base member (4) in a stop position and the stop (26) is urged against the spring force into the leg portion (20, 21) so as to release the abutting contact between the stop (26) and the base member (4), when the cover member (2) is pivoted further towards the base member (4).

14. A protection device according to any one of claims 1 to 13, **characterized in that** the pivot axis (6) is made of plastic material or a metallic material.

15. A protection device according to any one of the preceding claims, **characterized in that** the protection device is suitable for protecting the power take-off shaft of a work machine, in particular a tractor.

## Revendications

1. Dispositif de protection, notamment protection d'une prise de force pour une pièce d'extrémité d'un arbre, avec un couvercle (2) monobloc, conformé en U, fixé à pivotement sur un composant de base (4) et susceptible de pivoter autour d'un axe de pivotement (6), d'une position de base en différentes positions de protection,
**caractérisé en ce que**,
tant le couvercle (2) qu'également le composant de base (4) sont fabriqués en matière synthétique, et le couvercle (2) en forme de U présente, sur ses deux tronçons de branche (20, 21), des nervures de rigidification, pour augmenter la résistance aux sollicitations en piétinement et la résistance en flexion du couvercle (2), de manière que le dispositif de protection constitue une marche, et
le couvercle (2) est réalisé sous forme de composant de recouvrement (2), appuyant sur le composant de base (4), au moins dans la position de base, par l'intermédiaire d'une butée (26) réalisée latéralement sur au moins l'un des tronçons de branche (20, 21) du composant de recouvrement (2).

2. Dispositif de protection selon la revendication 1, **caractérisé en ce que** le composant de recouvrement (2) est composé au moins des deux tronçons de branche (20, 21) et d'une plaque de dessus (22) reliant ensemble les tronçons de branche (20, 21).

3. Dispositif de protection selon la revendication 1 ou 2, **caractérisé en ce que** l'axe de pivotement (6) est disposé à angle droit par rapport à l'axe de l'arbre.

4. Dispositif de protection selon la revendication 1, **caractérisé en ce que** la butée (26), sur un premier tronçon de branche (20), est tournée vers l'autre tronçon de branche (21) du composant de recouvrement (2).

5. Dispositif de protection selon la revendication 1 ou 4, **caractérisé en ce que** la butée (26) est réalisée sur les deux tronçons de branche (20, 21) de manière que les butées (26) respectives soient opposées en correspondance l'une avec l'autre.

6. Dispositif de protection selon l'une des revendications 1 à 5, **caractérisé en ce que** le composant de base (4) comprend des parties latérales (40, 41) opposées l'une à l'autre et reliées ensemble par une paroi de protection (42) disposée côté frontal.

7. Dispositif de protection selon la revendication 6, **caractérisé en ce qu'**un mécanisme d'encliquetage (24 ; 44, 46, 48) est réalisé sur au moins un tronçon de branche (20, 21) et une partie latérale (40, 41) correspondante.

8. Dispositif de protection selon la revendication 7, **caractérisé en ce que** le mécanisme d'encliquetage (24 ; 44, 46, 48) est configuré de manière que, dans les parties latérales (40, 41) soit réalisé au moins un évidement (44, 46, 48), susceptible de venir en prise avec un ergot d'encliquetage (24), faisant saillie, latéralement vers l'intérieur, des tronçons de branche (20, 21) du composant de recouvrement (2), pour fixer et maintenir les positions de protection correspondantes du composant de recouvrement (2) par rapport au composant de base (4).

9. Dispositif de protection selon la revendication 8, **caractérisé en ce que** l'évidement (44, 46, 48) est réalisé sous forme de trou oblong (44, 46, 48) dans les parties latérales (40, 41).

10. Dispositif de protection selon l'une des revendications 6 à 9, **caractérisé en ce que** la paroi de protection (42) comprend un évidement en forme de tête de bouteille, à travers lequel la pièce d'extrémité de l'arbre peut passer.

11. Dispositif de protection selon l'une des revendications 6 à 10, **caractérisé en ce que** le composant de recouvrement (2) est disposé sur une zone de transition entre le tronçon de branche (20, 21) et la plaque de dessus (22), qui relie ensemble les deux tronçons de branche (20, 21), et à angle droit par rapport à celles-ci, en présentant des nervures de rigidification et le composant de base (4) présente, sur une zone de transition entre les parties latérales (40, 41) et la paroi de protection (42), également des nervures de rigidification, de manière que la résistance et la rigidité en flexion des composants (2 et 4) soient augmentées.

12. Dispositif de protection selon l'une des revendications 1 à 11, **caractérisé en ce que** les tronçons de branche (20, 21) sont d'une élasticité en flexion telle que, par flexion des tronçons de branche (20, 21), le contact en appui entre la butée (26) et le composant de base (4) soit débloqué, pour pouvoir faire pivoter plus encore le composant de recouvrement (2) en direction du composant de base (4).

13. Dispositif de protection selon l'une des revendications 1 à 11, **caractérisé en ce que** la butée (26) est précontrainte, avec une sollicitation élastique, de manière que la butée (26) soit en saillie du tronçon de branche (20, 21), afin que, en une position en butée, le composant de recouvrement (2) soit en contact d'appui avec le composant de base (4), et la butée (26) est pressée dans le tronçon de branche (20, 21) à l'encontre de la force élastique, pour débloquer le contact d'appui entre la butée (26) et le composant de base (4), lorsque le composant de recouvrement (2) est pivoté plus encore en direction du composant de base (4).

14. Dispositif de protection selon l'une des revendications 1 à 13, **caractérisé en ce que** l'axe de pivotement (6) est fabriqué en matière synthétique ou en un matériau métallique.

15. Dispositif de protection selon l'une des revendications précédentes, **caractérisé en ce que** le dispositif de protection convient pour protéger l'arbre de prise de force d'une machine de travail, en particulier d'un tracteur.
